# EUROPEAN PATENT SPECIFICATION

(11) **EP 1 110 856 B1**
(45) Date of publication and mention of the grant of the patent: **22.08.2007**
(21) Application number: 00125916.7
(22) Date of filing: 27.11.2000
(51) Int. Cl.: B62M 23/02

(54) **Drive unit for motor-assisted bicycle**
Hilfsantrieb für Fahrräder
Bicyclette à assistance motorisée

(30) Priority: 22.12.1999 JP 36528499
(43) Date of publication of application: 27.06.2001
(73) Proprietor: HONDA GIKEN KOGYO KABUSHIKI KAISHA, Minato-ku, Tokyo (JP)
(72) Inventor: Yahagi, Kunio, Wako-shi, Saitama (JP); Toriyama, Masayuki, Wako-shi, Saitama (JP); Igarashi, Masashi, Wako-shi, Saitama (JP); Cho, Toshiyuki, Wako-shi, Saitama (JP); Sakagami, Koji, Wako-shi, Saitama (JP); Akiba, Ryuji, Wako-shi, Saitama (JP)
(74) Representative: Liska, Horst

(56) References cited:
- EP-A- 0 881 141
- EP-A- 0 968 911
- DE-A- 19 848 602
- PATENT ABSTRACTS OF JAPAN vol. 1998, no. 14, 31 December 1998 (1998-12-31) & JP 10 250673 A (MORIYAMA KOGYO KK; YAMAHA MOTOR CO LTD), 22 September 1998 (1998-09-22)

## Description

The present invention relates to a drive unit for a motor-assisted bicycle, and particularly to a drive unit for a motor-assisted bicycle suitable for reduction in weight of the bicycle.

Conventionally, there has been known a motor-assisted bicycle including a manually-driven system for transmitting a leg-power applied to pedals to a rear wheel, and a motor-driven system for adding an assist-power to the manually-driven system in response to the leg-power. For example, Japanese Patent laid-open No. Hei 10-250673 has disclosed a bicycle having a drive unit in which a manually-driven system including a crank shaft, its bearing, and the like and a drive system for synthesizing the output of a motor as an assist-power with a leg-power on the crank shaft are contained in a single housing.

The housing of the above-described prior art drive unit, which rotatably supports the crank shafts, is required to have a high rigidity, and therefore, it is made from a metal. On the other hand, since the motor-assisted bicycle is principally driven by a man-power, it may be desirable to reduce the weight of the entire motor-assisted bicycle for reducing the burden of the motor as the assist-power source. In particular, it may be desirable to reduce the weight of the drive unit made from a metal, which is a heavy material, for ensuring the rigidity.

DE 198 48 602 A discloses a drive unit in accordance with the preamble of claim 1. There, the resin case forms a cover covering the drive unit.

An object of the present invention is to solve the above-described problem of the prior art, and to provide a drive unit for a motor-assisted bicycle capable of ensuring a sufficient rigidity while reducing the weight of the bicycle.

To achieve the above object, according a first feature of the present invention, there is provided a drive unit for a motor-assisted bicycle, having a manually-driven portion including a pedal crank shaft for transmitting a leg-power and a motor-driven portion including a motor for generating an assist-power to be synthesized with a leg-power, wherein the drive unit comprises a case which contains the manually-driven portion and the motor-driven portion and which rotatably supports the shaft of the motor and the pedal crank shaft; wherein the case is produced from a resin by molding. With this feature, since the case as a heavy one of parts constituting the drive unit is made from a resin, it is possible to reduce the weight of the entire motor-assisted bicycle.

According to the present invention, the case has a hanger portion for mounting the case to a vehicular body; and a reinforcing member is inserted in the hanger portion upon resin molding of the case. With these features, it is possible to impart a sufficient strength to each of the bearing portion and the hanger portion on which a large load is applied while reducing the weight of the entire motor-assisted bicycle.

According to the present invention, the reinforcing member for reinforcing the hanger portion is connected to at least one of the reinforcing members for reinforcing the other parts, to form an integral reinforcing plate. With this fourth feature, since the reinforcing members are integrated with each other, it is possible to further enhance the reinforcing strengths of the reinforcing members. In particular, the connection portions between respective reinforcing members contribute to improvement of the strength of the entire case.

According to claim 2, the case internally includes the reinforcing members for reinforcing a bearing portion of the shaft of the motor and a bearing portion of the pedal crank shaft; and the reinforcing members are inserted in the case upon resin molding of the case.

According to claim 3, the shaft of the motor is disposed in parallel to the pedal crank shaft; the case is composed of a case main body, and cover members mounted to both sides of the case main body; one of two bearings for supporting the shaft of the motor is fixed to the case main body, and also one of two bearings for supporting the pedal crank shaft is fixed to the case main body; the other of the two bearings for supporting the shaft of the motor is fixed to one of the covers; and the other of the two bearings for supporting the pedal crank shaft is fixed to the other of the covers.

With these features it is possible to reduce the weight of the entire bicycle and to impart a sufficient strength to a portion required to be strengthened.

As described above, according to the inventions described in claims 1 to 3, since the case as a heavy one of parts constituting the drive unit is produced from a resin by molding, it is possible to reduce the weight of the entire motor-assisted bicycle. In particular, according to the inventions described in claims 2 and 3, it is possible to impart a sufficient strength to each of the bearing portion and the hanger portion on which a large load is applied while reducing the weight of the entire motor-assisted bicycle. According to the invention described in claim 1, since the reinforcing members are integrated with each other, it is possible to further enhance the reinforcing strengths of the reinforcing members. In particular, the connection portions between respective reinforcing members contribute to improvement of the strength of the entire case.

Hereinafter, one embodiment of the present invention will be described with reference to the drawings.
Fig. 1 is a view showing an entire configuration of a motor-assisted bicycle on which a drive unit of the present invention is mounted.
Fig. 2 is an enlarged view showing an essential portion of the bicycle shown in Fig. 1.
Fig. 3 is a sectional view of an essential portion of a motor-driven assist unit.
Fig. 4 is a sectional view taken on line A-A of Fig. 3.
Fig. 5 is a perspective view of a motor-driven assist unit according to a modification of the present invention.
Fig. 6 is a sectional view showing an essential portion of the unit shown in Fig. 5.

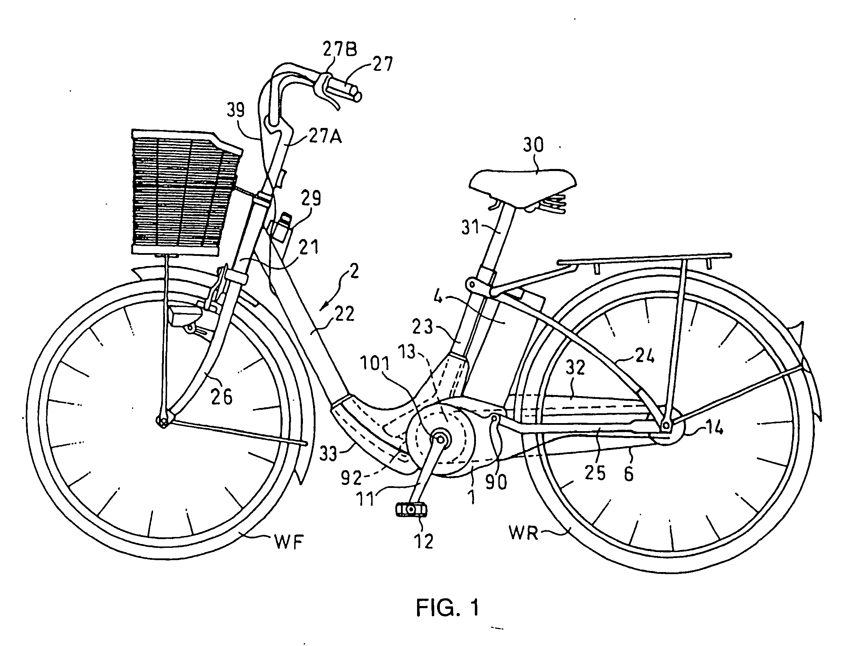

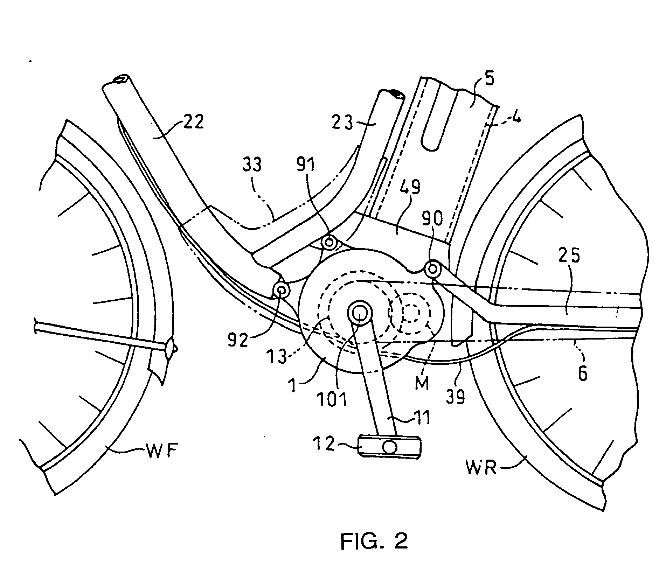

Fig. 1 is a side view of a motor-assisted bicycle having a drive unit of the present invention, and Fig. 2 is an enlarged view of an essential portion of the bicycle shown in Fig. 1. A body frame 2 of the motor-assisted bicycle according to the present invention includes a head pipe 21 disposed on the front side of a vehicular body; a down pipe 22 extending downwardly, rearwardly from the head pipe 21; and a seat post 23 raised upwardly from a portion, near the lower end, of the down pipe 22. A resin cover 33, which is divided into upper and lower parts, is removably mounted to cover a connection portion between the down pipe 22 and the seat post 23 and its neighborhood. A handle post 27A is turnably inserted in the head pipe 21. A steering handlebar 27 is fixed to an upper end of a portion, projecting upwardly from the head pipe 21, of the handle post 27A. A front fork 26 is connected to a lower end of a portion, extending downwardly in the head pipe 21, of the handle post 27A. A front wheel WF is rotatably supported between lower ends of the front fork 26.

A motor-driven assist unit 1 as a drive unit containing an electric motor M for assisting a leg-power is bolted to a connection portion 92 provided at a lower end of the down pipe 22, a connection portion 91 (see Fig. 2) provided on a front portion of the battery bracket 49 welded to the seat post 23, and a connection portion 90 provided on a rear portion of the bracket 49, to be thus suspended by a lower portion of the body frame 2. It should be noted that the motor-driven assist unit 1 and a chain stay 25 are co-fastened to the connection portion 90.

A power supply switch portion 29 for the motor-driven assist unit 1, which is turned on/off by a power supply key, is provided on a portion, near the head pipe 21, of the down pipe 22. In addition, the power supply switch 29 may be provided at a portion, on the front side of the handle post 27A, of a handlebar 27. The motor-driven assist unit 1 may be configured such that the power supply be turned on by a remote control switch (to be described later) using an infrared signal. In this case, the power supply switch portion 29 is provided with a receiver for receiving an infrared signal supplied from the remote control switch.

A drive sprocket 13 is provided on the motor-driven assist unit 1, and the rotation of a crank shaft 101 is transmitted from the drive sprocket 13 to a rear sprocket 14 via the chain 6. In addition, to enable regenerative power generation, the drive sprocket 13 and the rear sprocket 14 are rigidly mounted in order that when one of the drive sprocket 13 and the rear sprocket 14, for example, the drive sprocket 13 is normally or reversely rotated, the other sprocket, that is, the rear sprocket 14 is rotated while following the rotation of the drive sprocket 13.

A brake lever 27B is provided on the handlebar 27, and the operation of the brake lever 27B is transmitted to a braking device (not shown) of a rear wheel WR via a brake wire 39. The brake wire 39 is branched to the motor-driven assist unit 1, and the operation of the brake lever 27B is transmitted, as a displacement of the brake wire 39, to a regenerative power generator operating cam to be described later.

According to this bicycle, since the connection portion between the down pipe 22 and the seat post 23 is laid out in front of the motor-driven assists unit 1, the motor-driven assist unit 1 can be disposed at a lower position, to thereby lower the center of gravity of the bicycle, and further, since the lowermost portion of the body frame 2 is located at a lower position, it is possible to ensure the ease of the rider's striding operation across the body frame 2.

The crank shaft 101 is rotatably supported by the motor-driven assist unit 1. Cranks 11 are rotatably supported by right and left ends of the crank shaft 101, and pedals 12 are mounted on leading ends of the cranks 11. The rear wheel WR as a drive wheel is rotatably supported between ends of a pair of right and left chain stays 25 extending rearwardly from the motor-driven assist unit 1. A pair of seat stays 24 are provided between an upper portion of the seat post 23 and the ends of the chain stays 25. A seat pipe 31, on an upper end of which a seat 30 is mounted, is slidably inserted in the seat post 23 in order to adjust the vertical position of the seat 30.

A battery housing case 5 (hereinafter, referred to as "housing case") for housing the battery 4 is mounted under the seat 30 and behind the seat post 23. The battery 4, which is composed of a plurality of battery cells, is disposed along the seat post 23 with its longitudinal direction kept substantially in the vertical direction.

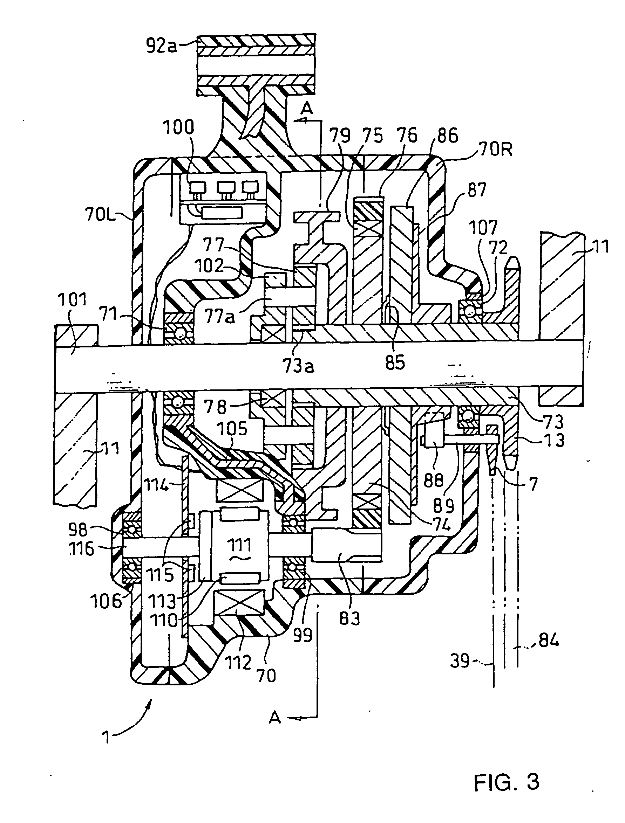

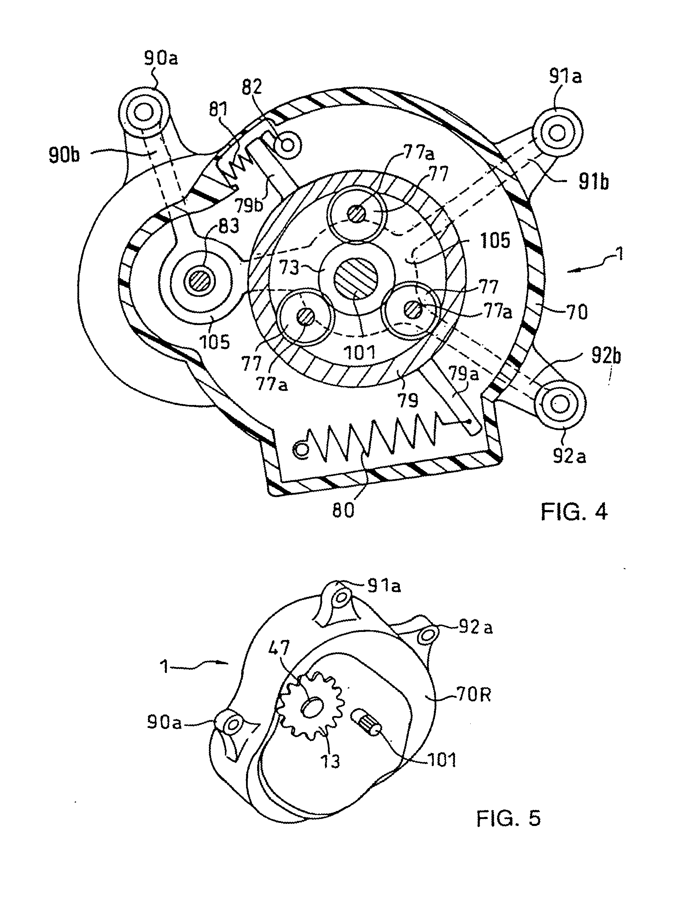

Fig. 3 is a sectional view of the motor-driven assist unit 1, and Fig. 4 is a sectional view taken on line A-A of Fig. 3. A case of the motor-driven assist unit 1 includes a main body 70, and a left cover 70L and a right cover 70R mounted on both side surfaces of the main body 70. Each of the case 70 and the left and right covers 70L and 70R is produced from a resin by molding for reducing the weight thereof. Hangers 90a, 91a, and 92a, which correspond to the above-described connection portions 90, 91, and 92 formed on the down pipe 22 and the battery bracket 49 respectively, are provided at the outer periphery of the case main body 70. A bearing 71 is provided in the main body 70, and a bearing 72 is provided in the right cover 70R. The crank shaft 101 is fitted in an inner ring of the bearing 71, and a sleeve 73, which is coaxially provided on the outer periphery of the crank shaft 101 in such a manner as to be slidable in the outer peripheral direction of the crank shaft 101, is fitted in an inner ring of the bearing 72. In this way, the crank shaft 101 is supported by the bearings 71 and 72.

A boss 74 is fixed on the sleeve 73, and an assist gear 76 is provided on the outer periphery of the boss 74 via a one-way clutch 75 which is typically configured as a ratchet mechanism. The assist gear 76 may be preferably made from a resin from the viewpoint of reduction in weight, and it may be preferably configured as a helical gear from the viewpoint of reduction in noise.

A gear 73a is formed on an end portion of the sleeve 73. The gear 73a is configured as a sun gear, and three planetary gears 77 are disposed on the outer periphery of the sun gear 73a. The planetary gears 77 are supported by shafts 77a erected on a supporting plate 102, and the supporting plate 102 is supported by the crank shaft 101 via a one-way clutch 78. The planetary gears 77 are meshed with an inner gear formed on the inner periphery of a leg-power detecting ring 79. The drive sprocket 13 connected to the rear sprocket 14 via the chain 6 is connected to the other end portion, opposed to the end portion on which the gear 73a is formed, of the sleeve 73.

The leg-power detecting ring 79 has arms 79a and 79b projecting outwardly from the outer periphery of the ring 79. The arm 79a is biased in the direction opposed to the rotational direction of the crank shaft 101 upon running (clockwise in Fig. 4) by a tensile spring 80 provided between the arm 79a and the main body 70. The arm 79b is biased in the direction opposed to the rotational direction of the crank shaft 101 upon running (clockwise in Fig. 4) by a compression spring 81 provided between the arm 79b and the main body 70. The compression spring 81 is provided for preventing the occurrence of backlash of the ring 79. A potentiometer 82 for detecting the displacement of the ring 79 in the rotational direction is provided on the arm 79b.

A clutch plate 86 for regenerative power generation is provided on the sleeve 73 adjacently to the assist gear 76 with a spring washer 85 put therebetween. A pressure plate 87 for pressing the plate 86 on the assist gear 76 side against an elastic force of the spring washer 85 is provided on the sleeve 73 in such a manner as to be in contact with the clutch plate 86. The clutch plate 86 and the pressure plate 87 are each provided on the sleeve 73 slidably in the axial direction of the sleeve 73.

The pressure plate 87 is biased toward the clutch plate 86 by a cam 88 being in contact with a tilt plane formed on a hub portion of the pressure plate 87. A shaft 89 of the cam 88 is turnably supported by the right cover 70R, and a lever 7 is fixed to an end portion, projecting outwardly from the right cover 70R, of the shaft 89. The lever 7 is connected to the brake wire 39. Upon braking operation, the lever 7 is turned by the brake wire 39, and the cam 88 is turned around the shaft 89.

A pinion 83 fixed to a shaft of the motor M is meshed with the assist gear 76. The motor M, which is configured as a three-phase brushless motor, includes a rotor 111 having a magnetic pole 110 formed by a neodymium based magnet (Nd-Fe-B alloy magnet), a rubber magnet ring (on which N-poles and S-poles are alternately disposed) 13 provided on a side surface of the rotor 111, a Hall IC 115 mounted to a board 114 in such a manner as to face to the rubber magnet ring 113, and a shaft 116 of the rotor 111. The shaft 116 is supported by a bearing 98 provided in the left cover 70L and a bearing 99 provided in the case main body 70.

A controller 100 including FETs as drive elements for controlling the motor M and capacitors is provided in a front portion of the case main body 70. A current is supplied to the stator coil 112 via the FETs. The controller 100 is used for rotating the motor M in response to a leg-power detected by the potentiometer 82 as the leg-power detector, thereby generating an assist power.

Each of the case main body 70 and covers 70L and 70R may be, as described above, desirable to be produced from a resin by molding from the viewpoint of reduction in weight; however, the peripheries of the bearings are required to be strengthened. For this purpose, according to this embodiment, metal made reinforcing members 105, 106 and 107, each of which is made from iron, aluminum, an aluminum alloy, a copper alloy, or the like, are disposed around the bearings. In particular, with respect to reinforcement of parts in the case main body 70, since large loads may be applied to the parts in the case main body 70, for example, the bearing 71 of the crank shaft 101, the bearing 99 of the motor shaft 116, and the hangers 90a, 91a, and 92a as the mounting members to the vehicular body, reinforcing members 90b, 91b and 92b for independently reinforcing the above parts are integrated with each other for strengthening the reinforcing members, to form a reinforcing plate 105. The reinforcing plate 105 obtained by integrating the reinforcing members disposed around the bearings and hangers with each other makes it possible to enhance the reinforcing effect.

The reinforcing plate 105 is not limited to a reinforcing plate obtained by connecting all of the reinforcing members around the bearings 71 and 99, and the hangers 90a, 91a, and 92a to each other, but may be a reinforcing plate obtained by connecting those, close to each other, of these reinforcing members to each other, for example, a reinforcing plate obtained by connecting the reinforcing member around the bearing 71 to the reinforcing member around the bearing 99 or around one of the hangers 90a, 91a, and 92a. In addition, these reinforcing members 105, 106 and 107 can be inserted in the case 70 and covers 70L and 70R upon resin molding of the case.

According to the motor-driven assist unit 1 configured as described above, when a leg-power is applied to the crank shaft 101 via the cranks 11, the crank shaft 101 is rotated. The rotation of the crank shaft 101 is transmitted to the supporting plate gear 102 via the one-way clutch 78, to rotate the shafts 77a of the planetary gears 77 around the sun gear 73a, thereby rotating the sun gear 73a via the planetary gears 77. The rotation of the sun gear 73a causes the rotation of the drive sprocket 13 fixed to the sleeve 73.

When a load is applied to the rear wheel WR, the leg-power detecting ring 79 is turned in response to the load. The turning of the leg-power detecting ring 79 is detected by the potentiometer 82. If the output of the potentiometer 82, that is, the output corresponding to the load applied to the rear wheel WR is larger than a predetermined value, the motor M is rotated in response to the output of the potentiometer 82, to generate an assist-power. The assist-power thus generated is synthesized with a drive torque manually applied to the crankshaft 101, and the resultant power is transmitted to the drive sprocket 13.

When a brake operation is applied to decelerate the vehicle upon running of the vehicle, the cam 88 is turned around the shaft 89 by the brake wire 39, and the clutch plate 86 is pressed by the pressure plate 87. As a result, the clutch plate 86 is shifted on the assist gear 76 side to connect the assist gear 76 to the boss 74, and the rotation of the boss 74 is transmitted to the assist gear 76. Accordingly, the rotation of the sprocket 13 during brake operation is transmitted to the pinion 83 via the sleeve 73, boss 74, and assist gear 76. The stator coil 112 generates an electromotive force, that is, performs regenerative power generation by the rotation of the pinion 83. A current generated by power generation is supplied to the battery 4 via the controller 100, to charge the battery 4.

In the above-described embodiment, the crank shaft 101 is disposed coaxially with the drive sprocket 13; however, as will be described later, the shaft 101 and the shaft of the drive sprocket 13 may be configured as independent shafts. This presents an advantage that bearing loads can be distributed.

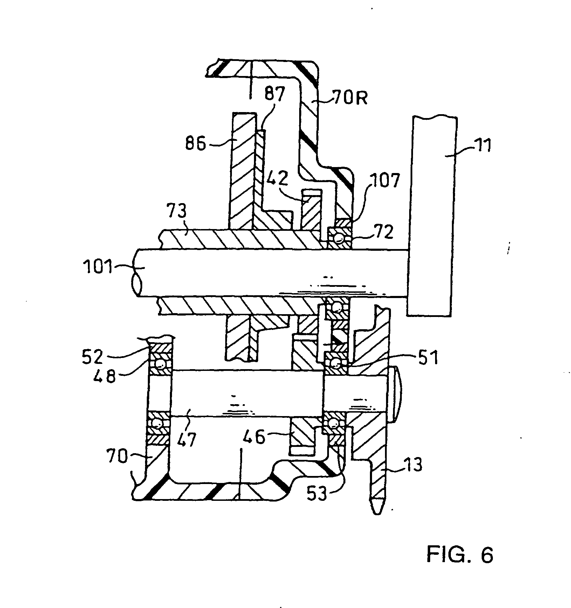

Fig. 5 is a perspective view of a motor-drive assist unit 1 according to a second embodiment, and Fig. 6 is a sectional view showing an essential portion of the unit 1 shown in Fig. 5. In these figures, parts being the same as or similar to those shown in Figs. 3 and 4 are designated by the same characters. In the second embodiment, the shaft of a drive sprocket 13 and a crank shaft 101 are configured as independent shafts. An intermediate gear 42 is mounted on a sleeve 73 provided coaxially with the crank shaft 101, and an output shaft 47, to which an output gear 46 meshed with the intermediate gear 42 is fixed, is provided separately from the crank shaft 101. The output shaft 47 is supported by a bearing 48 provided in the case main body 70 and a bearing 51 provided in the right cover 70R, and the drive sprocket 13 is fixed to an end portion, projecting outwardly from the right cover 70R, of the output shaft 47. In addition, reinforcing members 52 and 53 are provided around the bearings 48 and 51, respectively. These reinforcing members 52 and 53 can be each connected to adjacent reinforcing members, to form a reinforcing plate, like the above-described reinforcing plate 10. With this configuration, since the load is distributed and thereby a load shared by each bearing is reduced, it becomes easier to adopt the case produced from a resin by molding.

The invention reduces the weight of a drive unit for motor-assisted bicycle.

To achieve this, a case of a drive unit (motor-driven assist unit) 1 is composed of a case main body 70, and left and right covers 70L and 70R. These members constituting the case are each produced from a resin by molding. The peripheries of bearings of a motor shaft 116 and a crank shaft 101, and hanger portions 90a, 91a, and 92a are reinforced by reinforcing members 105, 106 and 107. In particular, the reinforcing member 105 is configured as an integral reinforcing plate obtained by connecting a plurality of reinforcing members to each other.

## Claims

1. A drive unit for a motor-assisted bicycle, having a manually-driven portion including a pedal crank shaft (101) for transmitting a leg-power and a motor-driven portion including a motor (M) for generating an assist-power to be synthesized with a leg-power,
wherein said drive unit (1) comprises a case (70, 70L, 70R) which contains said manually-driven portion and said motor-driven portion
which is produced from a resin by molding, and which has a hanger portion (90a, 91 a, 92a) for mounting said case (70, 70L, 70R) to a vehicular body; **characterized in that** said case (70, 70L, 70R) rotatably supports the shaft (116) of said motor (M) and said pedal crank shaft (101);
wherein a reinforcing member (105, 106, 107) is inserted in said hanger portion (90a, 91a, 92a) upon resin molding of said case and is connected to at least one of a plurality of other reinforcing members for reinforcing other parts, to form an integral reinforcing plate.

2. A drive unit for a motor-assisted bicycle according to claim 1,
wherein said case (70, 70L, 70R) internally includes said other reinforcing members (105, 106, 107) for reinforcing a bearing portion (99) of the shaft (116) of said motor (M) and a bearing portion (71) of said pedal crank shaft (101); and
said other reinforcing members (105, 106, 107) are inserted in said case upon resin molding of said case.

3. A drive unit for a motor-assisted bicycle according to claim 1 or 2,
wherein the shaft (116) of said motor (M) is disposed in parallel to said pedal crank shaft (101);
said case is composed of a case main body (70), and cover members (70L, 70R) mounted to both sides of said case main body;
one (99) of two bearings for supporting the shaft (116) of said motor is fixed to said case main body (70), and also one (71) of two bearings for supporting said pedal crank shaft (101) is fixed to said case main body (70); the other (98) of said two bearings for supporting the shaft (116) of said motor is fixed to one (70L) of said covers; and
the other (72) of said two bearings for supporting said pedal crank shaft (101) is fixed to the other of said covers (70R).

## Patentansprüche

1. Antriebseinheit für ein motorunterstütztes Fahrrad, die einen manuell betriebenen Abschnitt, der eine Pedalkurbelwelle (101) zur Übertragung von Beinkraft enthält, und einen motorbetriebenen Abschnitt, der einen Motor (M) zum Erzeugen einer mit Beinkraft zu vereinigenden Hilfskraft enthält, aufweist,
worin die Antriebseinheit (1) ein Gehäuse (70, 70L, 70R) aufweist, das den manuell betriebenen Abschnitt und den motorbetriebenen Abschnitt aufnimmt, das aus durch Gießen aus Kunstharz hergestellt ist und das einen Aufhängungsabschnitt (90a, 91a, 92a) zum Anbringen des Gehäuses (70, 70L, 70R) an einem Fahrzeugkörper aufweist;
**dadurch gekennzeichnet, dass** das Gehäuse (70, 70L, 70R) die Welle (116) des Motors (M) und die Pedalkurbelwelle (101) drehbar trägt;
worin ein Verstärkungselement (105, 106, 107) beim Kunstharzguss des Gehäuses in den Aufhängungsabschnitt (90a, 91 a, 92a) eingesetzt ist und mit zumindest einem einer Mehrzahl anderer Verstärkungselemente zum Verstärken anderer Teile verbunden ist, um eine integrale Verstärkungsplatte zu bilden.

2. Antriebseinheit für ein motorunterstütztes Fahrrad nach Anspruch 1,
worin das Gehäuse (70, 70L, 70R) im Inneren die anderen Verstärkungselemente (105, 106, 107) zum Verstärken eines Lagerabschnitts (99) der Welle (116) des Motors (M) und eines Lagerabschnitts (71) der Pedalkurbelwelle (101) enthält; und
wobei die anderen Verstärkungselemente (105, 106, 107) beim Kunstharzguss des Gehäuses in das Gehäuse eingesetzt sind.

3. Antriebseinheit für ein motorunterstütztes Fahrrad nach Anspruch 1 oder 2,
worin die Welle (116) des Motors (M) parallel zur Pedalkurbelwelle (101) angeordnet ist;
das Gehäuse aus einem Gehäusehauptkörper (70) und an beiden Seiten des Gehäusehauptkörpers angebrachten Deckelelementen (70L, 70R) zusammengesetzt ist;
wobei eines (99) von zwei Lagern zum Tragen der Welle (116) des Motors an dem Gehäusehauptkörper (70) befestigt ist, und auch eines (71) von zwei Lagern zum Tragen der Pedalkurbelwelle (101) an dem Gehäusehauptkörper (70) befestigt ist; wobei das andere (98) der zwei Lager zum Tragen der Welle (116) des Motors an einem (70L) der Deckel befestigt ist; und
das andere (72) der zwei Lager zum Tragen der Pealkurbelwelle (101) an dem anderen (70R) der Deckel befestigt ist.

## Revendications

1. Unité d'entraînement pour une bicyclette à assistance motorisée, ayant une partie entraînée manuellement comprenant une manivelle de pédale (101) pour transmettre une puissance de jambe et une partie d'entraînement par moteur comprenant un moteur (M) pour générer une puissance assistée destinée à être synthétisée par une puissance de jambe,
dans laquelle ladite unité d'entraînement (1) comprend un carter (70, 70L, 70R) qui contient ladite partie entraînée manuellement et ladite partie d'entraînement par moteur,
qui est produit à partir d'une résine par moulage et qui a une partie de crochet (90a, 91a, 92a) pour monter ledit carter (70, 70L, 70R) sur une carrosserie de véhicule ;
**caractérisée en ce que** ledit carter (70, 70L, 70R) supporte de manière rotative l'arbre (116) dudit moteur (M) et ladite manivelle de pédale (101) ;
dans laquelle un élément de renforcement (105, 106, 107) est inséré dans ladite partie de crochet (90a, 91a, 92a) suite au moulage de résine dudit carter et est raccordé à au moins l'un parmi une pluralité d'autres éléments de renforcement pour renforcer les autres parties, afin de former une plaque de renforcement solidaire.

2. Unité d'entraînement pour une bicyclette à assistance motorisée selon la revendication 1, dans laquelle ledit carter (70, 70L, 70R) comprend intérieurement lesdits autres éléments de renforcement (105, 106, 107) pour renforcer une partie de palier (99) de l'arbre (116) dudit moteur (M) et une partie de palier (71) de ladite manivelle de pédale (101) ; et
lesdits autres éléments de renforcement (105, 106, 107) sont insérés dans ledit carter suite au moulage de résine dudit carter.

3. Unité d'entraînement pour une bicyclette à assistance motorisée selon la revendication 1 ou 2, dans laquelle l'arbre (116) dudit moteur (N) est disposé parallèlement à ladite manivelle de pédale (101) ;
ledit carter est composé d'un corps principal de carter (70) et d'éléments de couvercle (70L, 70R) montés des deux cotés dudit corps principal de carter ; l'un (99) des deux paliers pour supporter l'arbre (116) dudit moteur est fixé sur ledit corps principal de carter (70) et également l'un (71) des deux paliers pour supporter ladite manivelle de pédale (101) est fixé sur ledit corps principal de carter (70) ;
l'autre (98) desdits deux paliers pour supporter l'arbre (116) dudit moteur est fixé sur l'un (70L) desdits couvercles ; et
l'autre (72) desdits deux paliers pour supporter ladite manivelle de pédale (101) est fixé sur l'autre desdits couvercles (70R).
